(19) **Europäisches Patentamt / European Patent Office / Office européen des brevets**

(11) **EP 3 904 545 A1**

(12) **EUROPEAN PATENT APPLICATION**

(43) Date of publication:
**03.11.2021 Bulletin 2021/44**

(51) Int Cl.:
**C22B 1/248** *(2006.01)*    **B22F 8/00** *(2006.01)*

(21) Application number: **20275082.4**

(22) Date of filing: **30.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **APPARATUS AND METHOD**

(57)    A method of processing swarf comprising a first metal is described. The method comprises: providing a canister defining a volume to receive the swarf therein and comprising a gas inlet/outlet; receiving the swarf in the volume, thereby filling, at least in part, the canister; evacuating gas from the filled canister, via the gas inlet/outlet; heating the evacuated canister to an Mth temperature of a set of temperatures; and consolidating the heated canister for an Nth duration of a set of durations, for example by compressing the heated canister in one, two or three dimensions, thereby forming a briquette therefrom.

Fig. 1

**Description**

**Field**

The present invention relates to processing of swarf.

**Background to the invention**

Swarf, also known as metal swarf, comprises and/or is waste or debris resulting from subtractive manufacturing processing, for example machining including turning, boring, milling, drilling, hobbing and/or grinding, of metals. Swarf may be in the form of turnings, filings, shavings, chips, dust and/or particles, depending, at least in part, on the metal and/or the subtractive manufacturing process. For example, turning of low alloy steel may result in swarf in the form of long, stringy tendrils while milling of stainless steel may result in swarf in the form of chips. Turnings and tendrils particularly are generally helical and relatively resilient. Swarf is generally voluminous, having a gross density typically in a range of just 5% to approximately 60% of that of the processed metal with chips being the most dense and spiral turnings the least.

Depending, at least in part, on a shape and/or a size of a precursor (also known as a preform, a blank or an intermediate) used, the subtractive manufacturing processes employed and/or a shape and/or a size of the component manufactured therefrom and thereby, up to 95% or even 98% by volume of the machining pre-form may be removed, thereby resulting in a significant quantity of swarf. Typically, different metals may be machined in a particular machine shop and whilst at least some sorting of the swarf is performed, swarf tends to be mixed i.e. comprising different metals, for example alloys. In addition, most subtractive manufacturing processes include cooling and/or lubricating of machine-tools and/or the metals, such that the swarf is coated thereby.

Disposal of swarf, for example categorised according to the European Waste Catalogue (CWC), is problematic due, at least in part, to a quantity thereof and/or contamination by coolants and/or lubricants. However, it is desirable to recycle swarf, for example to recover the metal. Typically, ferrous metal swarf may be recycled as scrap included in a blast furnace, for example. Recycling of nonferrous metal swarf, however, is more limited though may include re-melting, typically together with virgin metal, to provide ingots, for example. However, since recycling of swarf generally includes re-melting, economic and/or environmental costs of recycling swarf are relatively high. As such, an economic value of swarf is relatively low, for example only a few percent of the economic value of the first metal in the form of a precursor.

Titanium alloys are used extensively in aerospace and biomedical applications, due to their high strength to weight ratios, corrosion resistance and fatigue resistance, for example. However, an economic cost of titanium alloy precursors is relatively high, since production of such precursors may involve vacuum arc melting, plasma arc melting and/or electron beam melting of the alloys, so as to improve a solids content and/or a microstructure of the precursor, followed typically by multistage thermal mechanical forming, such as forging, and heat treatment. Furthermore, subtractive manufacturing of such precursors is typically complex and/or extensive, with up to 90%, 95% or even 98% metal removal. The amount of titanium alloy swarf produced is estimated to rise to about 100,000 tonnes per annum over the next decade. While a proportion of the resulting titanium alloy swarf is recycled, at relatively low cost, for additives for steelmaking, it is desirable to recycle the titanium alloy swarf into titanium alloy components. Conventional processes for recycling titanium alloy swarf include field assisted sintering technology (FAST)-forge processing, also known as Spark Plasma Sintering (SPS), and equal-channel angular pressing (ECAP). FAST-forge processing typically involves sintering of powder feedstock, for example using a FAST Furnace Type HP D 25 (available from FCT Systeme GmbH, Rauenstein, Germany), to form near net shape, but relatively small, components. FAST-forge processing uses a graphite die layup procedure in which a graphite ring die is lined with a layer of graphite foil. FAST-forge processing has been adapted to involve sintering of titanium alloy swarf, to form a disc, 60.0 mm in diameter and 10.3 mm in thickness, from 130 g of swarf, by consolidation at 1200 °C and 20 MPa for 30 minutes. ECAP compaction combines direct uniaxial and/or biaxial compaction of titanium alloy swarf in orthogonal channels, using punches, and post-deformation heat treatments, including annealing. However, FAST-forge processing and ECAP are severely-size limited while development of these processes so as to form relatively larger precursors or components is expected to be arduous and potentially prohibitively expensive. Furthermore, the temperatures and/or pressures required are relatively high, thereby increasing complexity and/or economic and/or environmental costs.

Hence, there is a need to improve processing of swarf.

**Summary of the Invention**

It is one aim of the present invention, amongst others, to provide an apparatus for and a method of processing swarf which at least partially obviate or mitigate at least some of the disadvantages of the prior art, whether identified herein or elsewhere. For instance, it is an aim of embodiments of the invention to provide a method of processing swarf to form relatively larger precursors or components. For instance, it is an aim of embodiments of the invention to provide an apparatus for processing swarf at relatively lower temperatures and/or pressures. For instance, it is an aim of embodiments of the invention to provide a relatively larger precursor and/or component from swarf.

A first aspect provides a method of processing swarf comprising a first metal, the method comprising:

providing a canister defining a volume to receive the swarf therein and comprising a gas inlet/outlet;
receiving the swarf in the volume, thereby filling, at least in part, the canister;
evacuating gas from the filled canister, via the gas inlet/outlet;
heating the evacuated canister to an Mth temperature of a set of temperatures; and
consolidating the heated canister for an Nth duration of a set of durations, for example by compressing the heated canister in one, two or three dimensions, thereby forming a briquette therefrom.

A second aspect provides an apparatus for processing swarf comprising a first metal, the apparatus comprising:

a heated press arranged to receive therein a canister defining a volume filled, at least in part, with the swarf and comprising a gas inlet/outlet;
a pump arranged to evacuate gas from the filled canister, via the gas inlet/outlet; and
a controller arranged to control the heated press to:

heat the evacuated canister to an Mth temperature of a set of temperatures; and
consolidate the heated canister for an Nth duration of a set of durations, for example by compressing the heated canister in one, two or three dimensions, thereby forming a briquette therefrom.

A third aspect provides a briquette formed by a method according to the first aspect and/or using the apparatus according to the second aspect.

A fourth aspect provides a component manufactured, at least in part, from a briquette according to the third aspect.

## Detailed Description of the Invention

According to the present invention there is provided a method, as set forth in the appended claims. Also provided is an apparatus, a briquette and a component. Other features of the invention will be apparent from the dependent claims, and the description that follows.

### *Method*

The first aspect provides a method of processing swarf comprising a first metal, the method comprising:

providing a canister defining a volume to receive the swarf therein and comprising a gas inlet/outlet;
receiving the swarf in the volume, thereby filling, at least in part, the canister;
evacuating gas from the filled canister, via the gas inlet/outlet;
heating the evacuated canister to an Mth temperature of a set of temperatures; and
consolidating the heated canister for an Nth duration of a set of durations, for example by compressing the heated canister in one, two or three dimensions, thereby forming a briquette therefrom.

In this way, the canister encapsulates the swarf during the heating and consolidating, thereby physically constraining the swarf and controlling an atmosphere exposed thereto. By physically constraining the swarf, the swarf is effectively consolidated during the compressing, for example by a factor of 10 or more, thereby resulting in a briquette having a relatively high density compared with the first metal, relatively free from pores, and thus having good mechanical properties. Swarf is relatively resilient and may be elastically compressed by a factor of 2 or more. Hence, the relative resilience of the swarf may tend to attenuate collapse of the canister during evacuating, thereby preventing failure of the canister, for example perforation thereof resulting in loss of sealing. Even if the canister were to fail, the swarf interbinds and/or pre-sinters, forming an amorphous monolithic mass that is not released, thereby improving safety. By controlling the atmosphere exposed to the swarf during the heating and consolidating, oxidation, for example, of the swarf is reduced. Preferably, the consolidating is performed at temperatures at which significant diffusion bonding of the swarf takes place. Particularly, this method of encapsulating the swarf during the heating and consolidating enables forming of relatively larger precursors or components, compared with conventional processes for recycling swarf. Furthermore, the method may be performed at relatively lower temperatures and/or pressures, thereby lowering economic and/or environmental costs and/or reducing a complexity, compared with conventional processes for recycling swarf.

For example, the heating and consolidating may be performed using an adapted heated uniaxial press.

*Overview*

Generally, the method involves producing a canister from a suitable canister material for subsequent hot briquetting, with the option of either removing the canister before subsequent HIP diffusion bonding or retaining the canister during the HIP diffusion bonding.

The canister is formed from a suitable material. Preferably, this is the same material as the swarf, for example SPF grade Ti-6Al-4V sheet or similar for swarf of the same alloy and the canister would then be assimilated into the underlying swarf material during the method. However, titanium alloy sheet for canister is relatively expensive and unlikely to be cost-effective. A cheaper alternative is a duplex stainless steel such Ottokumpu LDX2101, which is relatively cheap, while weldable and highly formable. Such a stainless steel is typically used as a driver sheet for diffusion bonding prior to super plastic forming. An open canister preferably takes the form of a simple pressing formed in a female tool. The female tool may have features defined therein, for example ribs, to imbue shape and form into the open canister and hence into the briquette. The open canister may have a relatively simple flat closure or lid sealed there on (i.e. joined open canister to lid) and/or another such open canister may be sealed thereto (i.e. joined open canister to open canister). The sealing or joining is in a fully gas tight manner after first substantially filling the cavity or volume within the canister with the swarf. The gas inlet/outlet is for evacuating the swarf filled canister so as to remove air or gas from therewithin prior to hot processing.

The filled canister, including the gas inlet/outlet, is loaded into a press, for example a uniaxial press, such as comprising a bolster or a pair thereof, for example upper and lower bolsters. In one example, the bolster comprise and/or is a flat bolster or a bolster having a preformed shape. The preformed shape of the bolster may be consistent with that of the preformed canister, such as including corresponding corrugations or stiffeners, or the preformed shape of the bolster may act on a flat wall of the canister, thereby imparting the preformed shape thereon and/or therein. The pair of bolsters, for example upper and lower bolsters, may be as described with respect to the bolster. Thermal expansion coefficients of the press, bolster, canister and/or swarf may be matched if a briquette having a high-fidelity shape is desired. Typically, the press is hydraulically powered and heatable, for example having heated platens. The canister maybe first evacuated or a settling tonnage (i.e. pre-consolidation) first applied to affect the level of cold crushing before evacuating the canister. The use of the pre-consolidation may depend on whether the canister material and/or properties (for example thickness and/or geometry) may satisfactorily resist the implosive forces during evacuating without first pre-consolidating the canister. If such implosive forces cannot be resisted then pre-consolidation, for example by hydraulically pressing the canister in the press, will generate an internal pressure within the swarf filled canister that will enable the external pressure differential with the swarf under vacuum to be adequately resisted. If such pre-consolidation is required, then the level of tonnage (i.e. compression) applied is preferably controlled and/or modulated to ensure that enough internal pressure is maintained.

The canister may be actively purged, for example with helium gas and re-evacuated, optionally repeatedly, and all the best possible vacuum achieved. The choice may depend on whether enhanced helium-assisted HIP diffusion bonding is used later.

Once the required vacuum is achieved, the temperature is progressively increased, for example using the heated platens, thereby heating the swarf filled canister whilst maintaining vacuum and/or purge. The heating under vacuum, for example continuously applying vacuum, is to drive off any moisture, for example. Typically, the heating may be at around 170°C to 200° C. Pre-consolidation may be maintained during this heating.

Once the moisture has been removed, for example as monitored using residual gas analysis, then a constant high vacuum may be maintained, such as by continuously pumping. Pre-consolidation compression may now be removed, for example by raising the upper platen of the press, since the canister is now dimensionally stable. Raising the upper platen also allows thermal expansion of the canister during subsequent heating.

The canister is then heated by raising the temperature thereof whilst maintaining vacuum. Heating is to a temperature of about 900°C to 930°C for titanium alloys but maybe lower, provided that an adequate level of compression with permanent deformation is achieved so as to form the briquette for subsequent HIPing. Preferably, the consolidation achieves a substantial level of diffusion bonding of the swarf and so the temperature of consolidation needs to be relatively high, for example compared with a melting point of the particular alloy.

At the required temperature, the canister is progressively consolidated, so as to avoid perforating the canister. In this way, the canister remains gas tight during the consolidation. Consolidation by, in this example, uniaxially compressing the canister is increased and optionally, the temperature increased to the desired diffusion bonding temperature, typically about 930°C for titanium alloys but maybe higher though for titanium alloys, normally below the beta transus temperature. The compression may depend on a size and/or a shape of the canister, together with mechanical properties of the canister and the swarf therein. For example, for diffusion bonding may be achieved, thereby obviating the need for subsequent HIPing, if the total compression is sufficiently high. More typically, the compression is at least 200 psi preferably at least 500 psi. Preferably, a level of consolidation of the swarf in the canister is such as to provide a fully gas tight seal or region within the consolidated swarf around the periphery thereof, such that the canister is not required during HIPing. For example, for titanium alloys, such as Ti-6AI-4V, the consolidation may be at around 930°C (a minimum normally of 900°C) at 200 psi to 500 psi for around two hours and potentially four hours or longer.

The briquette thus formed may be allowed to cool in the press, normally after removing compressive forces so as to facilitate thermal contraction without damaging the press, or may be removed when hot, for example using automated equipment.

Once cooled, the briquette may be HIP diffusion bonded including the canister or the canister may be removed, if briquetting conditions resulted in the fully gas tight seal or region within the collar consolidated swarf around the periphery thereof. The canister may be removed mechanically for example machining or chemically, for example using a differentiating acid system.

The briquette may be inspected prior to HIP diffusion bonding, for example using an ultrasonic C-scan.

After HIP diffusion bonding, the canister, if not previously removed, may be removed or the briquette may be further processed including the canister. Inspection of the HIP diffusion bonded may be repeated.

*Detail*

The first aspect provides the method of processing the swarf comprising the first metal.

*First metal*

In one example, the first metal comprises a ferrous alloy or a nonferrous alloy, for example a stainless steel, an aluminium alloy, a copper alloy, a titanium alloy, a nickel alloy or mixtures of respective alloys thereof, preferably corresponding and/or compatible alloys (for example having similar or the same nominal compositions) thereof. For example, the first metal may comprise and/or consist of one or more, for example a mixture of, Ti-6AI-4V alloys, as described below, according to AMS 4911R, AMS 4928W, AMS 4965K and AMS 4905F while excluding other titanium alloys and other alloys and metals. In one example, the first metal does not comprise a mixture of a ferrous alloy and a nonferrous alloy.

*Ti alloy*

In one example, the metal comprises and/or is a Ti alloy, for example an $\alpha + \beta$ Ti alloy, or an $\alpha + \beta$ Ti alloy heat treated above a beta transus temperature $\beta_{transus}$ of the $\alpha + \beta$ Ti alloy.

## $\alpha + \beta$ Ti alloys

Elements having an atomic radius within $\pm 15\%$ of the atomic radius of Ti are substitutional elements and have significant solubility in Ti. Elements having an atomic radius less than 59% of the atomic radius of Ti, for example H, N, O and C, occupy interstitial sites and also have substantial solubility. The relatively high solubilities of substitutional and interstitial elements in Ti makes it difficult to design precipitation-hardened Ti alloys. However, B has a similar but larger radius than C, O, N and H and it is therefore possible to induce titanium boride precipitation. Cu precipitation is also possible in some alloys.

The substitutional elements may be categorised according to their effects on the stabilities of the $\alpha$ and $\beta$ phases. Hence, Al, O, N and Ga are $\alpha$ stabilisers while Mo, V, W and Ta are all $\beta$ stabilisers. Cu, Mn, Fe, Ni, Co and H are also $\beta$ stabilisers but form the eutectoid. The eutectoid reaction is frequently sluggish (since substitutional atoms involved) and is suppressed. Mo and V have the largest influence on $\beta$ stability and are common alloying elements. W is rarely added due to its high density. Cu forms $TiCu_2$, which makes such Ti alloys age-hardening and heat treatable. Zr, Sn and Si are neutral elements.

The interstitial elements do not fit properly in the Ti lattices and cause changes in the lattice parameters. Hydrogen is the most important interstitial element. Body-centred cubic (BCC) Ti has three octahedral interstices per atom while closed-packed hexagonal (CPH) Ti has one octahedral interstice per atom. The latter are therefore larger, so that the solubility of O, N, and C is much higher in the $\alpha$ phase.

Most $\alpha + \beta$ Ti alloys (also known as $\alpha - \beta$ Ti alloys, alpha-beta titanium alloys, dual-phase titanium alloys or two-phase titanium alloys) have high-strength and formability, and contain 4 - 6 wt.% of $\beta$ stabilisers which allow substantial amounts of $\beta$ to be retained on quenching from the $\beta \rightarrow \alpha + \beta$ phase fields. A typical $\alpha + \beta$ Ti alloy is Ti - 6AI - 4V (all nominal compositions in wt.% unless noted otherwise), while other $\alpha + \beta$ Ti alloys include Ti - 6AI - 6V - 2Sn and Ti - 6AI - 2Sn - 4Zr - Mo. Al reduces alloy density, stabilises and strengthens the $\alpha$ phase and increases the $\alpha + \beta \rightarrow \beta$

transformation temperature while V provides a greater amount of the more ductile $\beta$ phase for hot-working and reduces the $\alpha + \beta \to \beta$ transformation temperature. Table 1 shows nominal compositions of selected $\alpha + \beta$ Ti alloys.

Table 1: Nominal compositions of selected $\alpha + \beta$ Ti alloys. (a) Mechanical properties given for the annealed condition; may be solution treated and aged to increase strength; (b) Mechanical properties given for the solution-treated-and-aged condition; alloy not normally applied in annealed condition; (c) Semi-commercial alloy; mechanical properties and composition limits subject to negotiation with suppliers; (d) Primarily a tubing alloy; may be cold drawn to increase strength; (e) Combined $O_2 + 2N_2 = 0.27\%$; (f) Also solution treated and aged using an alternative aging temperature (480 °C, or 900 °F); (g) other elements total (wt.%, max) 0.40; (h) other elements each (wt.%, max) 0.10; (i) Y (wt.%, max) 0.005; (j) Y (wt.%, max) 0.05; (k) Ru (wt.%, min) 0.08, Ru (wt.%, max) 0.14

| $\alpha + \beta$ Ti alloys designation | Tensile strength (MPa, min) | 0.2% yield strength (MPa, min) | Composition (wt.%) | | | | | | | | | Impurity limits (wt.%, max) | | | | |
|---|---|---|---|---|---|---|---|---|---|---|---|---|---|---|---|---|
| | | | Al | Sn | Zr | Mo | V | Cu | Mn | Cr | Si | N | C | H | Fe | O |
| Ti-6Al-4V (g) (i) AMS 4911 R | 900 | 830 | 5.5 - 6.75 | | | | 3.5 - 4.5 | | | | | 0.05 | 0.08 | 0.015 | 0.30 | 0.20 |
| Ti-6Al-4V (a) (g) (i) AMS 4928W | 900 | 830 | 5.5 - 6.75 | | | | 3.5 - 4.5 | | | | | 0.05 | 0.08 | 0.0125 | 0.30 | 0.20 |
| Ti-6Al-4V ELI (g) (h) AMS 4930K | 830 | 760 | 5.5 6.5 | | | | 3.5 4.5 | | | | | 0.05 | 0.08 | 0.0125 | 0.25 | 0.13 |
| Ti-6Al-4V (g) (i) AMS 4965K | 890 | 820 | 5.5 - 6.75 | | | | 3.5 - 4.5 | | | | | 0.05 | 0.08 | 0.0125 | 0.30 | 0.20 |
| Ti-6Al-4V (a) (g) (i) AMS 4967M | 890 | 820 | 5.5 - 6.75 | | | | 3.5 - 4.5 | | | | | 0.05 | 0.08 | 0.0125 | 0.30 | 0.20 |
| Ti-6Al-4V ELI (g) (h) (j) AMS 6932C | 860 | 790 | 5.5 6.5 | | | | 3.5 4.5 | | | | | 0.05 | 0.08 | 0.0125 | 0.25 | 0.13 |
| Ti-6Al-4V (g) (h) (i) AMS 4905F | 860 | 790 | 5.6 6.3 | | | | 3.6 4.4 | | | | | 0.03 | 0.05 | 0.0125 | 0.25 | 0.12 |
| Ti-6Al-6V-2Sn (a) (g) (i) AMS 4971L | 1030 | 970 | 5.0 - 6.0 | 1.5 - 2.5 | | | 5.0 - 6.0 | 0.35 - 1.0 | | | | 0.04 | 0.05 | 0.015 | | 0.2 |
| Ti-6Al-4V (g) (h) TIMETAL 6-4 ASTM Grade 5 Mil T-9047 | 970 | 920 | 5.5 - 6.75 | | | | 3.5 - 4.5 | | | | | 0.05 | 0.08 | 0.015 | 0.40 | 0.2 |

(continued)

| $\alpha + \beta$ Ti alloys designation | Tensile strength (MPa, min) | 0.2% yield strength (MPa, min) | Composition (wt.%) | | | | | | | | | Impurity limits (wt.%, max) | | | | |
|---|---|---|---|---|---|---|---|---|---|---|---|---|---|---|---|---|
| | | | Al | Sn | Zr | Mo | V | Cu | Mn | Cr | Si | N | C | H | Fe | O |
| Ti-6Al-4V (g) (h) TIMETAL 6-4 ELI ASTM Grade 23 AMS 4981 | 970 | 920 | 5.5 6.5 | | | | 3.5 4.5 | | | | | 0.03 | 0.08 | 0.0125 | 0.25 | 0.13 |
| Ti-6Al-4V-0.1 Ru (g) (h) (k) ASTM Grade 29 | 970 | 920 | 5.5 - 6.5 | | | | 3.5 - 4.5 | | | | | 0.03 | 0.08 | 0.015 | 0.25 | 0.13 |
| Ti-8Mn (a) | 860 | 760 | | | | | | | 8 | | | 0.05 | 0.08 | 0.015 | 0.5 | 0.2 |
| Ti-7Al-4Mo (a) | 1030 | 970 | 7 | | | 4 | | | | | | 0.05 | 0.1 | 0.013 | 0.3 | 0.2 |
| Ti-6Al-2Sn-4Zr-6Mo (b) AMS 4981 | 1170 | 1100 | 6 | 2 | 4 | 6 | | | | | | 0.04 | 0.04 | 0.0125 | 0.15 | 0.15 |
| Ti-5Al-2Sn-2Zr-4Mo-4Cr (b) (c) | 1125 | 1055 | 5 | 2 | 2 | 4 | | | | 4 | | 0.04 | 0.05 | 0.0125 | 0.3 | 0.13 |
| Ti-6Al-2Sn-2Zr-2Mo-2Cr (c) | 1030 | 970 | 5.7 | 2 | 2 | 2 | | | | 2 | 0.25 | 0.03 | 0.05 | 0.0125 | 0.25 | 0.14 |
| Ti-3Al-2.5V (d) | 620 | 520 | 3 | | | | 2.5 | | | | | 0.015 | 0.05 | 0.015 | 0.3 | 0.12 |
| Ti-4Al-4Mo-2Sn-0.5Si | 1100 | 960 | 4 | 2 | | 4 | | | | | 0.5 | (e) | 0.02 | 0.0125 | 0.2 | (e) |

Ti - 6Al - 4V (martensitic $\alpha + \beta$ Ti alloy; $K_\beta$ = 0.3) accounts for about half of all the titanium alloys produced and is popular because of its strength (1100 MPa), creep resistance at 300 °C, fatigue resistance, good castability, plastic workability, heat treatability and weldability. Depending on required mechanical properties, heat treatments applied to Ti - 6Al - 4V alloys and more generally to $\alpha + \beta$ Ti alloys include: partial annealing (600 - 650 °C for about 1 hour), full annealing (700 - 850 °C followed by furnace cooling to about 600 °C followed by air cooling) or solutioning (880 - 950 °C followed by water quenching) and ageing (400 - 600 °C).

$\alpha + \beta$ Ti alloys constitute a very important group of structural materials used in aerospace applications. The microstructures of these $\alpha + \beta$ Ti alloys can be varied significantly during thermomechanical processing and/or heat treatment, allowing for tailoring of their mechanical properties, including fatigue behaviour, to specific application requirements.

The main types of microstructure of $\alpha + \beta$ Ti alloys are:

1. lamellar, formed after slow cooling when deformation or heat treatment takes place at a temperature in the single-phase $\beta$ field above the beta transus temperature $\beta_{transus}$, comprising colonies of HCP $\alpha$ phase lamellae within large BCC β phase grains of several hundred microns in diameter; and
2. equiaxed, formed after deformation in the two-phase $\alpha + \beta$ field (i.e. below the beta transus temperature $\beta_{transus}$), comprising globular $\alpha$-phase dispersed in a $\beta$ phase matrix.

In one example, the Mth temperature of the set of temperatures is below a beta transus temperature $\beta_{transus}$ of the $\alpha + \beta$ Ti alloy.

The beta transus temperature $\beta_{transus}$ is the temperature at which the $\alpha + \beta \rightarrow \beta$ transformation takes place and is thus the lowest temperature at which the Ti alloy is composed of a volume fraction $V_f$ = 1 of the BCC $\beta$ phase.

The lamellar microstructure is characterized by relatively low tensile ductility, moderate fatigue properties, and good creep and crack growth resistance. Important parameters of the lamellar microstructure with respect to mechanical properties include the $\beta$ grain size $D$, size $d$ of the colonies of $\alpha$ phase lamellae, thickness $t$ of the $\alpha$ phase lamellae and the morphology of the interlamellar interface ($\beta$ phase). Generally, an increase in cooling rate leads to refinement of the microstructure - both $\alpha$ phase colony size $d$ and $\alpha$ phase lamellae thickness $t$ are reduced. Additionally, new $\alpha$ phase colonies tend to nucleate not only on $\beta$ phase boundaries but also on boundaries of other $\alpha$ phase colonies, growing perpendicularly to the existing $\alpha$ phase lamellae. This leads to formation of a characteristic microstructure called "basket weave" or Widmanstätten microstructure.

The equiaxed microstructure has a better balance of strength and ductility at room temperature and fatigue properties which depend noticeably on the crystallographic texture of the HCP $\alpha$ phase.

An advantageous balance of properties can be obtained by development of bimodal microstructure consisting of primary $\alpha$ grains and fine lamellar $\alpha$ colonies within relatively small $\beta$ grains (10 - 20 $\mu$m in diameter).

The phase composition of $\alpha + \beta$ Ti alloys after cooling from the $\beta$ phase is controlled, at least in part, by the cooling rate. The kinetics of phase transformations is related, at least in part, to the $\beta$ phase stability coefficient $K_\beta$ due to the chemical composition of the $\alpha + \beta$ Ti alloy. The range of the $\alpha + \beta \rightarrow \beta$ phase transformation temperature determines, at least in part, conditions of thermomechanical processing intended for development of a desired microstructure. Start and finish temperatures of $\alpha + \beta \rightarrow \beta$ phase transformation vary depending, at least in part, on the amounts of $\beta$ stabilizing elements (Table 2).

Table 2: Start and finish temperature of the $\alpha + \beta \rightarrow \beta$ phase transformation for selected $\alpha + \beta$ Ti alloys ($v_h = v_c$ = 0.08 °C s$^{-1}$); ns: nucleation start; ps: precipitation start; s: start; f: finish.

| Temperature (°C) | Ti - 6Al - 4V | Ti - 6Al - 2Mo - 2Cr | Ti - 6Al - 5Mo - 5V - 1Cr - 1Fe |
|---|---|---|---|
| $T^{ns}_{\alpha+\beta\rightarrow\beta}$ | 890 | 840 | 790 |
| $T^{ps}_{\alpha+\beta\rightarrow\beta}$ | 930 | 920 | 830 |
| $T^{f}_{\alpha+\beta\rightarrow\beta}$ | 985 | 980 | 880 |
| $T^{s}_{\beta\rightarrow\alpha+\beta}$ | 950 | 940 | 850 |

(continued)

| Temperature (°C) | Ti - 6Al - 4V | Ti - 6Al - 2Mo - 2Cr | Ti - 6Al - 5Mo - 5V - 1Cr - 1Fe |
|---|---|---|---|
| $T^s_{\beta \to \alpha + \beta}$ | 870 | 850 | 810 |

The microstructure of $\alpha + \beta$ Ti alloys after deformation or heat treatment carried out above the beta transus temperature $\beta_{transus}$ depends, at least in part, on the cooling rate. Relatively higher cooling rates (> 18 °C s$^{-1}$) result in martensitic $\alpha'(\alpha'')$ microstructure for alloys having $\beta$ phase stability coefficient $K_\beta$ < 1 and metastable $\beta_M$ microstructure for alloys having higher $\beta$ phase stability coefficient $K_\beta$ Low and moderate cooling rates lead to development of lamellar microstructures consisting of colonies of $\alpha$ phase lamellae within large $\beta$ phase grains. A decrease in cooling rate cause an increase in both the thickness t of individual $\alpha$ phase lamellae and size $d$ of the $\alpha$ colonies. These in turn lower the yield stress and tensile strength of these $\alpha + \beta$ Ti alloys.

The lamellar $\alpha$ phase microstructure of $\alpha + \beta$ Ti alloys heat treated in the $\beta$ phase has a beneficial effect on fatigue behaviour, due to frequent changes in crack direction and secondary crack branching. When $\alpha$ phase lamellae are too large, thin layers of $\beta$ phase are not capable of absorbing large amounts of energy and retard crack propagation. In this case, the $\alpha$ phase colonies behave as singular element of the microstructure. This phenomenon is more pronounced in $\alpha + \beta$ Ti alloys having smaller $\beta$ phase stability coefficients $K_\beta$ such as Ti - 6Al - 4V. A sufficient thickness of the $\beta$ phase enables absorption of energy in the process of plastic deformation of regions ahead of crack tips, contributing to slowing a rate of crack propagation and therefore increasing fatigue life.

*Swarf*

The swarf comprises the first metal. In one example, the swarf comprises, substantially comprises (at least 50 wt.%), essentially comprises (at least 95 wt.%) or consists (at least 99.99 wt.%) of the first metal.

In one example, the swarf is in the form of turnings, filings, shavings, chips, dust and/or particles, preferably turnings, filings, shavings and/or chips. Such forms of swarf are known. In one example, the swarf is substantially free from (at most 5 wt.%) or essentially free from (at most 1 wt.%) powder. Dust and/or particles (i.e. powder) tend to settle during processing, resulting in stratification of the swarf and adversely affecting homogeneity of the briquette.

In one example, the swarf is according to European Waste Catalogue (EWC) Codes 12 01 01, 12 01 02, 12 01 03 and/or 12 01 04 (Table 3). In one example, the swarf is according to EWC Codes 12 01 01 and/or 12 01 02 or EWC Codes 12 01 03 and/or 12 01 04. In one example, the swarf comprises, substantially comprises (at least 50 wt.%), essentially comprises (at least 95 wt.%) or consists (at least 99.99 wt.%) of ferrous swarf or nonferrous swarf. In one example, the swarf comprises ferrous swarf and is substantially free from (at most 5 wt.%), essentially free from (at most 1 wt.%) or free from (at most 0.01 wt.%) ferrous swarf. In one example, the swarf comprises nonferrous swarf and is free from (at most 0.01 wt.%) ferrous swarf.

Table 3: European Waste Catalogue (EWC) Codes for swarf.

| EWC Code | Description | Examples | Sources |
|---|---|---|---|
| 12 01 01 | ferrous metal filings and turnings | steel swarf such as type E5H or E5M | steel processing plants, especially for mechanical or plant engineering |
| 12 01 02 | ferrous metal dust and particles | | steel processing plants, especially for mechanical or plant engineering |
| 12 01 03 | non-ferrous metal filings and turnings | stainless steel, aluminium alloys, copper alloys, titanium alloys, nickel alloys | mechanical, aerospace and medical engineering |
| 12 01 04 | non-ferrous metal dust and particles | stainless steel, aluminium alloys, copper alloys, titanium alloys, nickel alloys | mechanical, aerospace and medical engineering |

In one example, the method comprises producing the swarf from the first metal, for example by subtractive manufacturing of a precursor comprising and/or consisting of the first metal.

In one example, the method comprises sourcing the swarf, for example according to the first metal. In this way, swarf from metals having corresponding and/or compatible chemical compositions may be sourced.

In one example, the method comprises conditioning the swarf, for example via grading and/or cleaning. Swarf conditioning may be provided by Transition International Ltd (Sheffield, UK), for example.

In one example, the method comprises grading the swarf, for example to sort and/or to select the forms of swarf, such as to remove dust and/or particles.

In one example, the method comprises cleaning the swarf, for example to remove contaminants such as coolant and/or lubricant therefrom, before receiving the swarf in the volume. Methods of cleaning swarf are known and may include, for example, centrifugation followed by washing, rinsing and drying. In this way, clean swarf may be provided.

In one example, a chemical composition of the swarf corresponds with and/or is compatible with a chemical composition of the first metal, for example having similar or the same nominal compositions. In this way, a chemical composition of the formed briquette, for example excluding the canister, corresponds with and/or is compatible with the chemical composition of the first metal. In one example, a chemical composition of the swarf is in accordance with a standard of the first metal. In this way, a chemical composition of the formed briquette, for example excluding the canister, is in accordance with a standard of the first metal, thereby allowing the formed briquette to be used for similar applications thereof.

*Canister*

The method comprises providing the canister defining the volume to receive the swarf therein and comprising the gas inlet/outlet.

It should be understood that the canister (also known as a vessel or a drum) thus encloses, for example fully encloses, the volume and hence the swarf received therein. Since the gas is evacuated subsequently from the canister, via the gas inlet/outlet, it should be understood that the canister is hermetically sealed, notwithstanding that the canister comprises the gas inlet/outlet.

In one example, the volume is in a range from $0.1 \text{ dm}^3$ to $10 \text{ m}^3$, preferably in a range from $1 \text{ dm}^3$ to $3 \text{ m}^3$, more preferably in a range from $10 \text{ dm}^3$ to $1 \text{ m}^3$. In this way, relatively larger precursors or components may be formed, for example compared with conventional processes for recycling swarf.

In one example, the canister comprises a plurality of wall portions, for example a lower wall portion, an opposed upper wall portion and one or more sidewall portions therebetween. It should be understood that during uniaxial consolidating of the canister, the lower wall portion and the opposed of the wall portion may be pressed together and thus maybe relatively undeformed. In contrast, during such uniaxial consolidating of the canister, the sidewall portions may be substantially deformed, for example plastically. In one example, the gas inlet/outlet is provided in the lower wall portion or the upper wall portion. In this way, deformation of the gas inlet/outlet during such uniaxial consolidating of the canister may be avoided. In one example, the plurality of wall portions does not comprise any perforations therethrough, except for the gas inlet/outlet. In this way, a hermetically sealed canister is provided. In one example, the plurality of wall portions is formed from a sheet, for example having a thickness in a range from 0.5 mm to 10 mm, preferably in a range from 1 mm to 5 mm, more preferably in a range from 2 mm to 4 mm for example 3 mm.

In one example, the canister is generally cylindrical, having substantially planar and opposed upper wall portions and a cylindrical sidewall portion therebetween.

In one example, providing the canister comprises forming the canister, at least in part, from a sheet comprising the first metal. In one example, forming the canister comprises drawing, for example deep drawing, a first sheet, thereby providing an open canister, and coupling a second sheet (i.e. a lid) to a rim of the open canister, thereby closing the open canister and hence providing the canister. By forming the open canister by drawing and then closing the canister with a lid, a number and/or a length of joints is reduced, thereby improving hermetic sealing of the canister. Drawing and deep drawing of open canisters is known. In one example, providing the canister comprises providing an open canister, wherein the open canister defines, at least in part, the volume, and closing the open canister, for example with a lid (for example, the upper wall portion). In one example, the open canister comprises a lower wall portion and one or more sidewall portions and wherein an opposed upper wall portion of the canister is provided by a lid. In one example, closing the open canister with the lid comprises coupling the lid to a rim (also known as a lip) of the open canister, for example by welding. In order to maintain hermetic sealing of the canister, particularly during consolidating the heated canister, integrity of the coupling, for example the weld, should be maintained. In one example, welding the lid to the rim of the open canister comprises welding one, or preferably more, continuous welds around a periphery of the rim. For example, two or three continuous peripheral welds, mutually spaced apart, may be provided. Additionally and/or alternatively, in one example, welding the lid to the rim of the open canister comprises welding a spiral weld around the periphery of the rim.

In one example, the canister comprises a second metal having a chemical composition corresponding with and/or compatible with a chemical composition of the first metal, for example having similar or the same nominal compositions. In this way, a chemical composition of the formed briquette, for example including the canister, corresponds with and/or is compatible with the chemical composition of the first metal. In this way, the formed briquette, including the canister, may be used as a precursor and/or as a component. In one example, the canister comprises a second metal having a different chemical composition compared with a chemical composition of the first metal. In this way, the second metal may be selected according, for example, to mechanical and/or joining properties thereof. For example, some alloys such as particular stainless steels are suitable for deep drawing while having good weldability.

In one example, the canister comprises one or more internal wall portions, for example spaced apart from the lower wall portion and/or the upper wall portion. In one example, the internal wall portions comprise one or more perforations therethrough. In one example, the canister comprised two open canisters, as described above, wherein respective rims of the open canisters are mutually coupled, for example by welding, optionally wherein the canister comprises one or more internal wall portions, generally as described with respect to the upper wall portion.

*Filling the canister*

The method comprises receiving the swarf in the volume, thereby filling, at least in part, the canister.

In one example, the method comprises providing an open canister, as described above, wherein the open canister defines, at least in part, the volume, receiving the swarf in the volume, thereby filling, at least in part the open canister, and closing the open canister.

In one example, filling, at least in part, the canister comprises filling the canister with the swarf by at least 75%, preferably by at least 85%, more preferably by at least 90%, even more preferably by at least 95%, most preferably by at least 99% for example 100% with respect to the volume. In one example, filling, at least in part, the canister comprises filling the canister with the swarf in a range from 75% to 100%, preferably in a range from 85% to 99%, more preferably in a range from 90% to 95% with respect to the volume. It should be understood that the swarf, during filling, is not consolidated and thus the filling volume represents a gross volume of the swarf.

In one example, filling, at least in part, the canister comprises filling the canister with the swarf in an atmosphere comprising a purge gas such as $N_2$ and/or a noble gas such as He and/or Ar, as described below.

In one example, the method comprises receiving a powder comprising the first metal and/or a third metal (generally as described herein with respect to a second metal) in the volume together with the swarf, thereby filling, at least in part, the canister. In this way, densification of the consolidated canister may be improved since the powder fills voids between the swarf. In one example, the powder comprises and/or is powder for and/or obtained from (i.e. recycled from) additive manufacturing, for example from Selective Laser Melting (SLM). It should be understood that the powder comprises particles that are solid and may include discrete and/or agglomerated particles. In one example, the particles have an irregular shape, such as a spheroidal, a flake or a granular shape. In one example, the method comprises receiving the powder in an amount in a range from 1 wt.% to 50 wt.%, preferably in a range from 5 wt.% to 25 wt.% by weight of the filled canister.

*Pre-consolidating the canister*

In one example, the method comprises pre-consolidating the filled canister, for example by compression in one, two or three dimensions, for example before heating the filled canister. That is, the filled canister may be at least partially consolidated, for example at room temperature, thereby elastically deforming at least some of the swarf. This elastically deformed swarf resists collapsing of the canister during evacuating of the gas therefrom. In one example, pre-consolidating the filled canister is by compressing the filled canister in one, two or three dimensions at first pressure of the set of pressures in a range from 10 kPa to 0.5 MPa, preferably in a range from 50 kPa to 250 kPa, for example about 15 psi (about 0.1 MPa).

*Evacuating the canister*

The method comprises evacuating gas from the filled canister, via the gas inlet/outlet. In this way, porosity of the briquette may be reduced and/or dissolution of gas in the briquette may be reduced. In one example, evacuating gas from the filled canister, via the gas inlet/outlet, comprises evacuating gas to a pressure in a range from 0.001 mbar to 5 mbar, preferably in a range from 0.01 mbar to 1 mbar, for example using a rotary pump, for example progressively, such as at a rate in a range from 0.01 mbar.min$^{-1}$ to 1 mbar.min$^{-1}$. In one example, evacuating gas from the filled canister, via the gas inlet/outlet, comprises evacuating gas from the filled canister responsive to monitoring collapse of the canister. For example, evacuating gas may be caused if significant collapse of the canister is observed. In this way, hermetic sealing of the canister may be maintained. In one example, evacuating gas from the filled canister, via the gas inlet/outlet, does not comprise externally compressing the canister in one, two or three dimensions, for example as performed during pre-consolidating the filled canister.

In one example, evacuating the gas from the filled canister comprises analysing the evacuated gas, for example by residual gas analysis, RGA. In this way, a composition of the gas may be monitored. For example, evacuating the gas may continue until a level of a particular component of the gas falls below a predetermined threshold, such as during outgassing.

*Purging the canister*

In one example, the method comprises purging the filled canister, for example using a purge gas such as $N_2$ and/or a noble gas such as He and/or Ar. In this way, reactive gases such as oxygen may be better displaced from the filled canister and/or dissolution of certain gases in the briquette may be reduced. Preferably, noble gases other than He are avoided for titanium alloys since these gases will lead to subsequent gas entrapment porosity.

*Pre-heating the canister*

In one example, the method comprises pre-heating the evacuated canister to a first temperature of the set of temperatures for a first duration of the set of durations, for example to remove, at least in part, solvents and/or volatiles from the swarf. It should be understood that the evacuated canister includes the swarf received therein. In one example, the first temperature is in a range from 80°C to 300°C preferably in a range from 100°C to 250°C, more preferably in a range from 150°C to 200°C. In one example, the first duration is in a range from 1 hour to 72 hours, preferably in a range from 2 hours to 12 hours. In one example, pre-heating the evacuated canister to the first temperature comprises heating the evacuated canister to the first temperature at a rate in a range from $0.1°C.min^{-1}$ to $25°C.min^{-1}$ preferably in a range from $1°C.min^{-1}$ to $15°C.min^{-1}$, more preferably in a range from $2°C.min^{-1}$ to $5°C.min^{-1}$. In one example, evacuating gas from the filled canister, via the gas inlet/outlet, comprises pre-heating the evacuated canister. In one example, pre-heating the evacuated canister comprises pre-heating the evacuated canister while evacuating gas from the pre-heated canister, via the gas inlet/outlet. In one example, pre-heating the evacuated canister comprises maintaining compressing the filled canister in one, two or three dimensions at first pressure of the set of pressures in a range from 10 kPa to 0.5 MPa, preferably in a range from 50 kPa to 250 kPa, for example about 15 psi (about 0.1 MPa), for example as described with respect to pre-consolidating the filled canister.

*Consolidating the pre-heated canister*

In one example, the method comprises consolidating the pre-heated canister for a second duration of the set of durations, for example by compressing the pre-heated canister in one, two or three dimensions, thereby plastically-deforming the pre-heated canister. It should be understood that the pre-heated canister includes the swarf received therein.

In one example, the second duration is in a range from 0.5 hours to 12 hours, preferably in a range from 1 hour to 2 hours and optionally, wherein consolidating the pre-heated canister for the second duration is by compressing the heated canister in one, two or three dimensions at a second pressure of the set of pressures in a range from 1 MPa to 10 MPa, preferably in a range from 1.25 MPa to 5 MPa, for example in a range from 200 psi (about 1.38 MPa) to 2000 psi (about 13.8 MPa) and/or to an engineering compressive strain in a range from 40% to 95%, calculated based on initial dimensions of the canister. The actual level of compressive strain will very much depend on the form of swarf contained therein. For spiral turnings, the compressive strain can be up to approximately 95% while for chips, as little as 40%. In other words, the swarf may be compacted by a compaction ratio in a range from 5 : 2 to 20 : 1, for example 10 : 1.

In one example, consolidating the pre-heated canister for the second duration of the set of durations comprises consolidating the pre-heated canister for the second duration of the set of durations while evacuating gas from the pre-heated canister, via the gas inlet/outlet.

*Heating the canister*

The method comprises heating the evacuated canister to the Mth temperature of the set of temperatures. It should be understood that the evacuated canister includes the swarf received therein. By heating the evacuated canister and hence the swarf received therein, a yield stress of the swarf and/or the canister is reduced, thereby facilitating consolidation thereof. Additionally and/or alternatively, diffusional bonding of the swarf may take place at the Mth temperature. It should be understood that the Mth temperature depends, at least in part, on a form of the swarf, the metal and/or a duration and/or a pressure of consolidating the canister. In one example, the Mth temperature is in a range from $0.3T_m$ to $0.9T_m$, preferably $0.4T_m$ to $0.8T_m$, more preferably in a range from $0.5T_m$ to $0.7T_m$, for example about $0.6T_m$ wherein $T_m$ is the melting point of the first metal.

In one example, heating the evacuated canister to the Mth temperature of the set of temperatures comprises heating the evacuated canister to the Mth temperature of the set of temperatures while evacuating gas from the evacuated canister, via the gas inlet/outlet.

*Consolidating the canister*

The method comprises consolidating the heated canister for the Nth duration of the set of durations, for example by compressing the heated canister in one, two or three dimensions, thereby forming the briquette therefrom, for example while maintaining the consolidating canister at Mth temperature of the set of temperatures and/or further heating the consolidating canister to an M+1 th temperature. The M+1 th temperature may be generally as described with respect to the Mth temperature, for example in a range from $0.35T_m$ to $0.95T_m$, preferably $0.45T_m$ to $0.85T_m$, more preferably in a range from $0.55T_m$ to $0.75T_m$, for example about $0.65T_m$ wherein $T_m$ is the melting point of the first metal. That is, the M+1 th temperature may be about $0.025T_m$ to $0.05T_m$ greater than the Mth temperature. In this way, the briquette is formed from the swarf.

In one example, consolidating the heated canister for the Nth duration of the set of durations comprises consolidating the heated canister for the Nth duration of the set of durations while evacuating gas from the evacuated canister, via the gas inlet/outlet. In this way, porosity of the briquette may be reduced.

In one example, the Nth duration is in a range from 1 hour to 12 hours, preferably in a range from 2 hours to 4 hours and optionally, wherein consolidating the heated canister for the Nth duration is by compressing the heated canister in one, two or three dimensions at an Nth pressure of a set of pressures in a range from 1 MPa to 10 MPa, preferably in a range from 1.25 MPa to 5 MPa, for example in a range from 200 psi (about 1.38 MPa) to 2000 psi (about 13.8 MPa) and/or to an engineering strain in a range from 50% to 99%, preferably in a range from 75% to 97.5%, for example 90%, calculated based on initial dimensions of the canister. In this way, compaction of the swarf may be improved, since the swarf is plastically deformed at relatively high pressures and/or strains, thereby improving mechanical properties of the briquette.

In one example, consolidating the heated canister comprises, at least in part, diffusion bonding the swarf, for example at a temperature in a range from $0.5T_m$ to $0.9T_m$, preferably in a range from $0.5T_m$ to $0.7T_m$, for example about $0.6T_m$ wherein $T_m$ is the melting point of the first metal. In this way, mechanical properties of the briquette are improved.

In one example, diffusion bonding the swarf comprises diffusion bonding of a peripheral region of the swarf, for example proximal the canister. Particularly, a temperature in the region of the swarf may be relatively higher than a temperature in the core of the swarf, such that diffusion bonding of this peripheral region is accelerated. Advantageously, if the peripheral region is fully diffusion bonded and thus nonporous, the canister may be subsequently removed and the consolidated swarf HIPped, as described below.

*Cooling the briquette*

In one example, the method comprises cooling the briquette, for example natural cooling or air cooling, for example while not compressing the briquette.

*Briquette*

The briquette is this formed upon consolidating the heated canister for the Mth duration.

In one example, the briquette, for example the consolidated swarf therein i.e. excluding the canister, has a density of at least $0.90\rho$, $0.95\rho$, $0.975\rho$, $0.99\rho$, $0.999\rho$, or $0.9999\rho$, wherein $\rho$ is the density of the first metal. In one example, the briquette, for example the consolidated swarf therein i.e. excluding the canister, has a density in a range from 0.90p to 0.9999p, preferably in a range from $0.95\rho$ to $0.999\rho$, more preferably in a range from 0.975p to 0.99p, wherein $\rho$ is the density of the first metal. In this way, mechanical properties of the briquette may be similar to that of the first metal, optionally after further thermomechanical processing.

In one example, the briquette has a mass in a range from 0.25 kg to 5,000 kg, preferably in a range from 10 kg to 2,500 kg, more preferably in a range from 20 kg to 500 kg. In this way, a relatively large briquette may be formed, for example compared with conventional processes for recycling swarf. In one example, the briquette has a thickness in a range from 10 mm to 250 mm, preferably in a range from 25 mm to 125 mm, more preferably in a range from 50 mm to 100 mm. In one example, the briquette has a diameter in a range from 0.1 m to 2.5 m, preferably in a range from 0.25 m to 1.25 m, more preferably in a range from 0.5 m to 1.0 m.

*Removing the canister*

In one example, the method comprises removing the canister from the briquette, for example chemically, electrochemically, mechanically and/or thermally. For example, the canister may be removed from the briquette where the canister comprises a second metal dissimilar from the first metal.

*Non-destructive testing*

In one example, the method comprises non-destructive testing, NDT, of the briquette. In this way, floors and/or defects in the briquette may be identified, for example before hot isostatic pressing. In one example, the NDT comprises magnetic particle inspection, penetrant flaw detection, ultrasonic scanning and/or radiography of the briquette.

*Hot isostatic pressing*

In one example, the method comprises hot isostatic pressing, HIPing, the briquette. In this way, a density of the briquette may be further increased.

In one example, HIPing the briquette comprises HIPing the briquette for a duration in a range from 1 hour to 24 hours, preferably in a range from 2 hours to 8 hours, for example 4 hours, at a pressure in a range from 10 MPa to 1,000 MPa, preferably in a range from 50 MPa to 500 MPa, for example 140 MPa and/or at a temperature in a range from $0.35T_m$ to $0.95T_m$, preferably $0.45T_m$ to $0.85T_m$, more preferably in a range from $0.50T_m$ to $0.75T_m$. The above conditions being particularly suitable for Ti alloys.

*Thermomechanical forming*

In one example, the method comprises thermomechanically forming the briquette, for example after HIPing the briquette or without HIPing the briquette, for example by forging, rolling, extruding or drawing, the briquette.

In one example, the method comprises heat treating the briquette, for example after HIPing the briquette or without HIPing the briquette, before thermomechanically forming the briquette and/or after thermomechanically forming the briquette.

*Manufacturing a component*

In one example, the method comprises manufacturing, at least in part, a component from the briquette, for example after HIPing the briquette or without HIPing the briquette, for example by subtractive manufacturing.

In one example, the component comprises and/or is a plate such as an armour plate for a vehicle. Such plates may be fitted to the underside of the vehicle, for example, to improve protection from mines and/or improvised explosive devices (IEDs), for example.

*Preferred example*

In one preferred example, the method is of processing swarf comprising the first metal, the method comprising:

providing the canister defining the volume to receive the swarf therein and comprising the gas inlet/outlet;
receiving the swarf in the volume, thereby filling, at least in part, the canister;
evacuating gas from the filled canister, via the gas inlet/outlet;
heating the evacuated canister to the Mth temperature of the set of temperatures; and
consolidating the heated canister for the Nth duration of a set of durations, for example by compressing the heated canister in one, two or three dimensions, thereby forming the briquette therefrom;
wherein the first metal comprises and/or consists of one or more Ti alloys, preferably Ti-6Al-4V alloys, for example according to AMS 4911R, AMS 4928W, AMS 4965K and AMS 4905F;
wherein the swarf essentially comprises (at least 95 wt.%) or consists (at least 99.99 wt.%) of the first metal;
wherein the swarf is in the form of turnings, filings, shavings, chips, dust and/or particles, preferably turnings, filings, shavings and/or chips;
wherein the canister comprises a second metal having a chemical composition corresponding with and/or compatible with a chemical composition of the first metal, for example having similar or the same nominal compositions and/or a second metal having a different chemical composition compared with a chemical composition of the first metal;
wherein filling, at least in part, the canister comprises filling the canister with the swarf by at least 75%, preferably by at least 85%, more preferably by at least 90%, even more preferably by at least 95%, most preferably by at least 99% for example 100% with respect to the volume;
wherein the method comprises pre-consolidating the filled canister, for example by compression in one, two or three dimensions, for example before heating the filled canister;
wherein the method comprises pre-heating the evacuated canister to a first temperature of the set of temperatures for a first duration of the set of durations, for example to remove, at least in part, solvents and/or volatiles from the swarf;
wherein the method comprises consolidating the pre-heated canister for a second duration of the set of durations, for example by compressing the pre-heated canister in one, two or three dimensions;

wherein the Mth temperature of the set of temperatures is below a beta transus temperature $\beta_{transus}$ of the one or more Ti alloys; and

wherein the Nth duration is in a range from 1 hourto 12 hours, preferably in a range from 2 hours to 4 hours and optionally, wherein consolidating the heated canister for the Nth duration is by compressing the heated canister in one, two or three dimensions at an Nth pressure of a set of pressures in a range from 1 MPa to 10 MPa, preferably in a range from 1.25 MPa to 5 MPa, for example in a range from 200 psi (about 1.38 MPa) to 2000 psi (about 13.8 MPa) and/or to an engineering strain in a range from 50% to 99%, preferably in a range from 75% to 97.5%, for example 90%, calculated based on initial dimensions of the canister.

### Apparatus

The second aspect provides an apparatus for processing swarf comprising a first metal, the apparatus comprising:

a heated press arranged to receive therein a canister defining a volume filled, at least in part, with the swarf and comprising a gas inlet/outlet;
a pump arranged to evacuate gas from the filled canister, via the gas inlet/outlet; and
a controller arranged to control the heated press to:

heat the evacuated canister to an Mth temperature of a set of temperatures; and
consolidate the heated canister for an Nth duration of a set of durations, for example by compressing the heated canister in one, two or three dimensions, thereby forming a briquette therefrom.

The swarf, the first metal, the canister, the volume filled, the gas inlet/outlet, the evacuating, the heating, the evacuated canister, the Mth temperature, the set of temperatures, the consolidating, the Mth duration, the set of durations and/or the briquette may be as described with respect to the first aspect.

The apparatus may be arranged to perform any of the steps described with respect to the first aspect.

In one example, the heated press comprises and/or is a heated uniaxial press, for example a hydraulic uniaxial press having heated platens, for example having a load capacity in a range from 100 T to 20,000 T, preferably in a range from 500 T to 10,000 T.

In one example, the pump comprises and/or is a rotary vane vacuum pump, for example a single stage or a two-stage rotary vane pump, for example having pumping speed in a range from 1.25 $m^3$/h to 1,600 $m^3$/h, preferably in a range from 25 $m^3$/h to 500 $m^3$/h.

In one example, the apparatus comprises a residual gas analyser, fluidically coupled to the gas inlet/outlet.

### Briquette

The third aspect provides a briquette formed by a method according to the first aspect and/or using the apparatus according to the second aspect.

### Component

The fourth aspect provides a component manufactured, at least in part, from a briquette according to the third aspect.

The component may be as described with respect to the first aspect.

### Definitions

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

**Brief description of the drawings**

For a better understanding of the invention, and to show how exemplary embodiments of the same may be brought into effect, reference will be made, by way of example only, to the accompanying diagrammatic Figures, in which:

Figure 1 schematically depicts a method according to an exemplary embodiment; and

Figures 2A to 2D schematically depict an apparatus and a method according to an exemplary embodiment.

**Detailed Description of the Drawings**

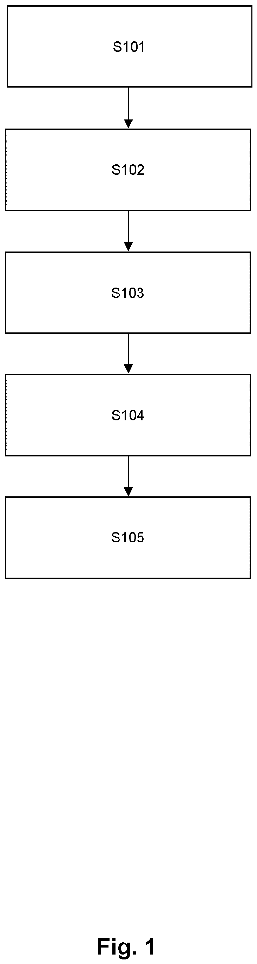

Figure 1 schematically depicts a method according to an exemplary embodiment.

The method is of processing swarf comprising a first metal.

At S101, the method comprises providing a canister defining a volume to receive the swarf therein and comprising a gas inlet/outlet.

At S102, the method comprises receiving the swarf in the volume, thereby filling, at least in part, the canister.

At S103, the method comprises evacuating gas from the filled canister, via the gas inlet/outlet.

At S104, the method comprises heating the evacuated canister to an Mth temperature of a set of temperatures.

At S105, the method comprises consolidating the heated canister for an Nth duration of a set of durations, for example by compressing the heated canister in one, two or three dimensions, thereby forming a briquette therefrom.

The method may include any of the steps described with respect to the first aspect.

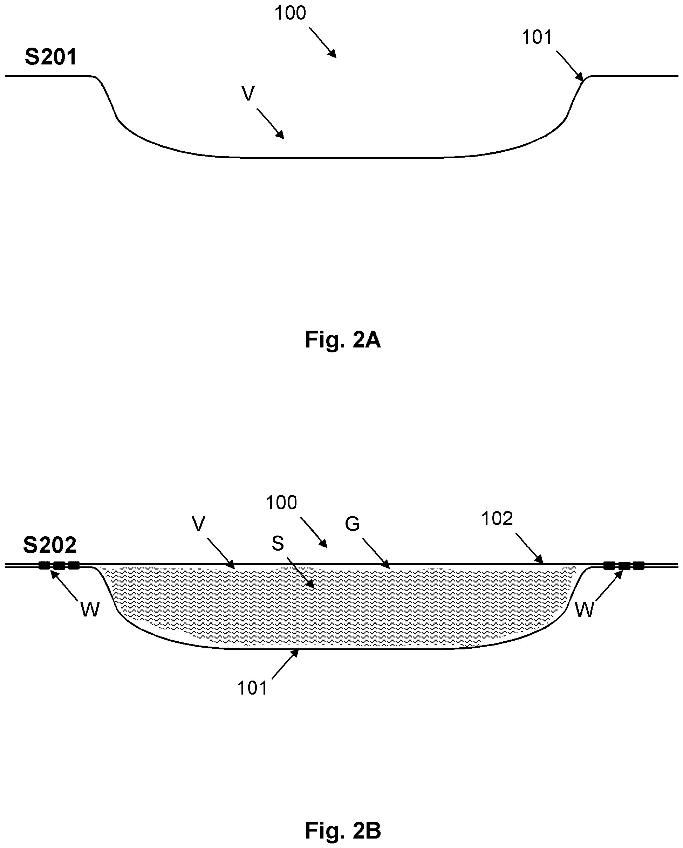

Figures 2A to 2D schematically depict an apparatus 1 and a method according to an exemplary embodiment.

The apparatus 1 is for processing swarf comprising a first metal. The apparatus 1 comprises a heated press 10 arranged to receive therein a canister 100 defining a volume V filled, at least in part, with the swarf S and comprising a gas inlet/outlet 110; a pump 20 arranged to evacuate gas G from the filled canister 100, via the gas inlet/outlet 110; and a controller 30 (not shown) arranged to control the heated press 10 to: heat the evacuated canister 100 to an Mth temperature of a set of temperatures; and consolidate the heated canister 100 for an Nth duration of a set of durations, by compressing the heated canister 100 in one dimension, thereby forming a briquette B therefrom.

In this example, the heated press 10 comprises and/or is a hydraulic uniaxial press 10 having heated platens 11A, 11B, having a load capacity in a range from 2,000 T to 10,000 T.

In one example, the pump 20 is a rotary vane vacuum pump, having pumping speed in a range from 25 $m^3$/h to 500 $m^3$/h.

At S201, the method comprises providing the canister 100 defining the volume V to receive the swarf S therein and comprising the gas inlet/outlet 110. Figure 2A schematically depicts an open canister 101 formed from a duplex stainless steel (e.g. Ottokumpu LDX2101) by drawing in a female tool.

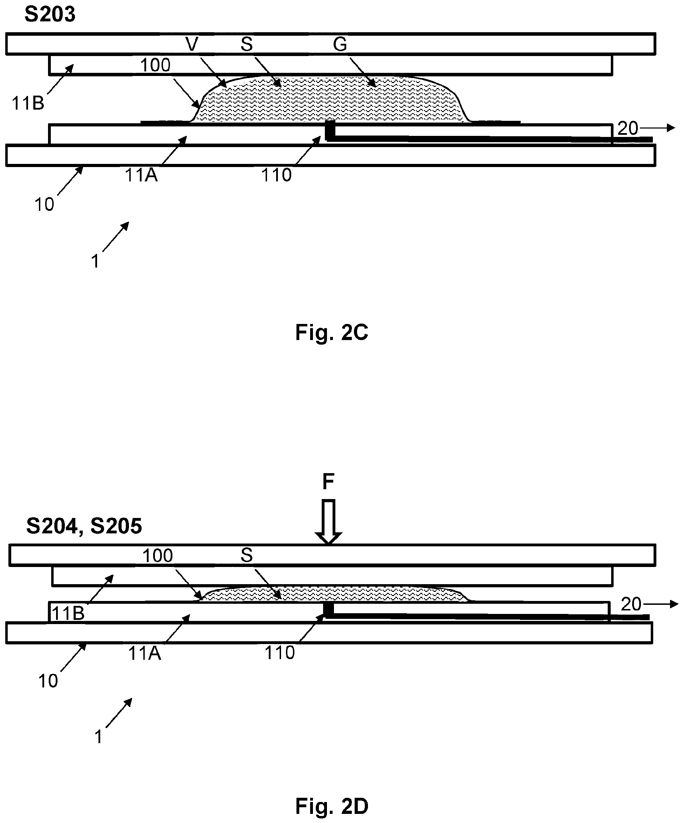

At S202, the method comprises receiving the swarf S in the volume, thereby filling, at least in part, the canister 100. Figure 2B schematically depicts the swarf S received in the volume, thereby filling, at least in part, the canister 100. In more detail, the open canister 101 is cleaned and filled with clean swarf S and a sealing lid 102 sealed thereto by multiple concentric laser welds W or similar. The sealing welds are leak-tight and robust. The gas inlet/outlet 110 is fitted through the sealing lid 102, as shown in Figure 2C.

At S203, the method comprises evacuating gas from the filled canister, via the gas inlet/outlet. Figure 2C schematically depicts the inverted, filled canister 100 loaded to a bolstered configuration into the heated hydraulic press 10.

Figure 2D schematically depicts heating and consolidating the filled canister 100.

At S204, the method comprises heating the evacuated canister to an Mth temperature of a set of temperatures.

At S205, the method comprises consolidating the heated canister for an Nth duration of a set of durations, for example by compressing F the heated canister in one, two or three dimensions, thereby forming a briquette therefrom.

In more detail:

Step 1: Apply settling tonnage compressing upper bolster onto deformable canister.

Step 2: Vent pressure during this step. Keep modest tonnage applied and maintain tonnage automatically - apply at least 15 psi vertical force.
Step 3: Apply vacuum. This should be progressive.
Step 4: Progressively increase temperature to 180°C and maintain a settling tonnage of at least 15 psi vertical force. There should be downwards movement as the pack is mechanically compressed. Hold vacuum at 180°C for about 4 hours. The process is now to apply a vacuum before first closure.
Step 5: Increase tonnage to crush pack to a significant extent. The pack should now be crushed to at least 75% of the total compaction and is now immune from implosive deformation from the sides. The press can now be partially opened to allow thermal expansion if this is desired. The vacuum is maintained.
Step 6: Increase temperature under continuous vacuum. Temperature should be increased to 900°C.
Step 7: Close ram at 900°C, if previously opened at step 5, whilst maintaining vacuum.
Step 8: Progressively increase tonnage and increase temperature to 930°C. The swarf around the vacuum pipe should seal closed.
Step 9: Apply equivalent of 500 psi of contact pressure and maintain for 2 hours. Crimp close vacuum pipe.
Step 10: Release tonnage and cool in press.
Step 11: The briquette should now be capable of direct HIP outside the steel envelope. Optionally NDT the briquette before and/or after HIP. Optionally machine the briquette to remove the canister - before or after HIP.
Step 12: HIP the briquette at 140 MPa for 4 hours at 930°C.

During step 7 and/or step 8, the load may be cycled, for example by opening and closing the ram.

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

**Claims**

1. A method of processing swarf comprising a first metal, the method comprising:

   providing a canister defining a volume to receive the swarf therein and comprising a gas inlet/outlet;
   receiving the swarf in the volume, thereby filling, at least in part, the canister;
   evacuating gas from the filled canister, via the gas inlet/outlet;
   heating the evacuated canister to an Mth temperature of a set of temperatures; and
   consolidating the heated canister for an Nth duration of a set of durations, for example by compressing the heated canister in one, two or three dimensions, thereby forming a briquette therefrom.

2. The method according to claim 1, comprising pre-consolidating the filled canister, for example by compression in one, two or three dimensions.

3. The method according to any previous claim, comprising purging the filled canister, for example using a purge gas such as $N_2$ and/or a noble gas such as He and/or Ar.

4. The method according to any previous claim, comprising pre-heating the evacuated canister to a first temperature of the set of temperatures for a first duration of the set of durations, for example to remove, at least in part, solvents and/or volatiles from the swarf.

5. The method according to any previous claim, wherein evacuating the gas from the filled canister comprises analysing the evacuated gas, for example by residual gas analysis, RGA.

6. The method according to any previous claim, wherein consolidating the heated canister comprises, at least in part, diffusion bonding the swarf.

7. The method according to claim 6, wherein diffusion bonding the swarf comprises diffusion bonding of a peripheral region of the swarf.

8. The method according to any previous claim, comprising removing the canister from the briquette, for example chemically, electrochemically, mechanically and/or thermally.

9. The method according to any previous claim, comprising non-destructive testing of the briquette.

10. The method according to any previous claim, comprising hot isostatic pressing, HIPing, the briquette.

11. The method according to any previous claim, wherein providing the canister comprises forming the canister, at least in part, from a sheet comprising the first metal.

12. The method according to any previous claim, wherein the metal comprises and/or is a Ti alloy, for example an $\alpha + \beta$ Ti alloy and/or or the $\alpha + \beta$ Ti alloy heat treated above a beta transus temperature $\beta_{transus}$ thereof, optionally wherein the Mth temperature of the set of temperatures is below the beta transus temperature $\beta_{transus}$ of the $\alpha + \beta$ Ti alloy.

13. The method according to any previous claim, wherein the Nth duration is in a range from 1 hour to 12 hours, preferably in a range from 2 hours to 4 hours and optionally, wherein consolidating the heated canister for the Nth duration is by compressing the heated canister in one, two or three dimensions at an Nth pressure of a set of pressures in a range from 1 MPa to 10 MPa, preferably in a range from 1.25 MPa to 5 MPa, for example in a range from 200 psi (about 1.38 MPa) to 2000 psi (about 13.8 MPa).

14. An apparatus for processing swarf comprising a first metal, the apparatus comprising:

   a heated press arranged to receive therein a canister defining a volume filled, at least in part, with the swarf and comprising a gas inlet/outlet;
   a pump arranged to evacuate gas from the filled canister, via the gas inlet/outlet; and
   a controller arranged to control the heated press to:

   heat the evacuated canister to an Mth temperature of a set of temperatures; and
   consolidate the heated canister for an Nth duration of a set of durations, for example by compressing the heated canister in one, two or three dimensions, thereby forming a briquette therefrom.

15. A briquette formed by the method according to any of claims 1 to 13 and/or using the apparatus according to claim 14.

**Fig. 1**

100

101

S201

V

Fig. 2A

100

V    S    G    102

S202

W

101

W

Fig. 2B

**S203**

**Fig. 2C**

**S204, S205**

**Fig. 2D**

Europäisches
Patentamt

European
Patent Office

Office européen
des brevets

## EUROPEAN SEARCH REPORT

Application Number

EP 20 27 5082

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 151 261 A (ROLLS ROYCE) 17 July 1985 (1985-07-17) * the whole document * ----- | 1-15 | INV. C22B1/248 B22F8/00 |
| X | JP H10 96033 A (TOYOTA MOTOR CORP; AICHI STEEL WORKS LTD ET AL.) 14 April 1998 (1998-04-14) * the whole document * ----- | 1,14,15 | |
| X | CN 106 238 492 A (UNIV TAIYUAN TECHNOLOGY) 21 December 2016 (2016-12-21) * the whole document * ----- | 1,14,15 | |

TECHNICAL FIELDS
SEARCHED      (IPC)

C22B
C22C
B22F

The present search report has been drawn up for all claims

| Place of search | Date of completion of the search | Examiner |
|---|---|---|
| Munich | 30 September 2020 | Juhart, Matjaz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 904 545 A1**

## ANNEX TO THE EUROPEAN SEARCH REPORT
## ON EUROPEAN PATENT APPLICATION NO.

EP 20 27 5082

30-09-2020

| Patent document cited in search report | | Publication date | Patent family member(s) | Publication date |
|---|---|---|---|---|
| GB 2151261 | A | 17-07-1985 | NONE | |
| JP H1096033 | A | 14-04-1998 | NONE | |
| CN 106238492 | A | 21-12-2016 | NONE | |

EPO FORM P0459

For more details about this annex : see Official Journal of the European Patent Office, No. 12/82